# EUROPEAN PATENT APPLICATION

(11) **EP 4 576 523 A1**
(43) Date of publication of application: **25.06.2025**
(21) Application number: 22955438.1
(22) Date of filing: 25.08.2022
(51) Int. Cl.: H02K 15/00, H02K 9/10, H02K 9/19, H02K 1/20, H02K 16/04

(54) **COOLING STRUCTURE, STATOR, AXIAL MAGNETIC FIELD MOTOR, AND ASSEMBLY METHOD THEREOF**

(30) Priority: 16.08.2022 CN 202210978200
(71) Applicant: Zhejiang Pangood Power Technology Co., Ltd., Jinhua, Zhejiang 321109 (CN)
(72) Inventor: CUI, Haojie, Jinhua, Zhejiang 321109 (CN); CHEN, Xuan, Jinhua, Zhejiang 321109 (CN); WANG, Zhihui, Jinhua, Zhejiang 321109 (CN); LIANG, Yusheng, Jinhua, Zhejiang 321109 (CN); SUN, Xianwang, Jinhua, Zhejiang 321109 (CN); QU, Xijia, Jinhua, Zhejiang 321109 (CN); YAN, Lulu, Jinhua, Zhejiang 321109 (CN)
(74) Representative: advotec.
(86) International application number: PCT/CN2022/114710
(87) International publication number: WO 2024/036659

(57) **Abstract**

The present invention provides a cooling structure, a stator, an axial magnetic field motor and an assembly method thereof. The cooling structure comprises a cooling disc. The cooling disc comprises a rotor-facing surface, a stator-facing surface and several stator sleeve holes which penetrate through the rotor-facing surface and the stator-facing surface. Flow channel are further arranged between the rotor-facing surface and the stator-facing surface. The flow channels surround the periphery of the stator sleeve holes. The cooling disc can be built into the motor and arranged between the stator and the rotor, and then a cooling medium is introduced into the flow channels to transfer the heat of the rotor and the stator by means of the flowing cooling medium. Compared to conventional casing water channel arrangement methods, the heat transfer path between the rotor and the stator and the cooling structure is shortened, so as to effectively improve the heat dissipation effect and ensure the reliable operation of the motor.

## Description

### FIELD

The present disclosure relates to the technical field of axial flux motors, and in particular to a cooling structure, a stator, an axial flux motor and an assembly method thereof.

### BACKGROUND

An electric motor is an electromagnetic device that converts or transmits electric energy based on Faraday's law of induction. The main function of the motor is to produce a driving torque to serve as a power source for electrical devices and various types of machinery. Motors may fall into two categories, namely radial flux motors and axial flux motors. The axial flux motors, also known as disc motors, have the characteristics of small size, light weight, short axial dimension, and high power density. The axial flux motors are applicable to most thin mounting scenarios, and are therefore widely used.

The motor includes a frame, and a stator and a rotor that are provided inside the frame. The stator is electric and stationary, and mainly consists of an iron core and coils wound around the iron core. The coils are formed by winding enameled wires. The function of the stator is to generate a rotating magnetic field, and the rotor cuts field lines in the magnetic field to generate current. A large amount of heat is produced inside the motor during operation, and most of the heat is generated by the coils, which increases the temperature of the coils. If the temperature of the coils is too high, an insulation layer on a surface of the coils may be damaged. Short-circuit occurs between the enameled wires, causing a serious consequence that the motor is burnt. Additionally, a permanent magnet of the rotor also produces some of the heat. If the temperature is too high, the permanent magnet may be demagnetized, which further degrades the performance of the motor. Therefore, the motor is expected to be provided with a cooling structure to reduce the temperature.

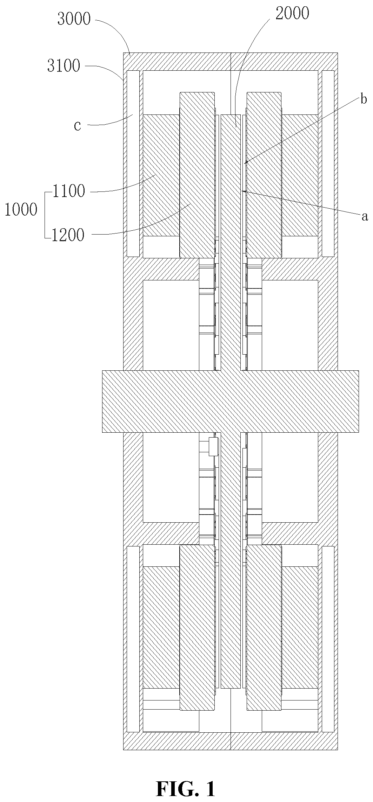

Most of existing cooling structures of the motor are arranged on the frame in the form of water channels. Take an axial flux motor of a double-stator single-rotor type as an example. Referring to FIG. 1, a rotor 2000 is retained between two stators 1000 with an air gap between the rotor 2000 and each stator 1000, and the rotor 2000 and the two stators 1000 are enclosed in a frame 3000 as a whole. The frame 3000 includes bottom plates 3100 abutting against stator cores 1100. Water channels c are provided inside the bottom plates 3100 to cool the motor. However, the rotor 2000 and coils 1200 are far away from the water channels **c** on respect sides. As a result, a heat of the rotor 2000 can only be transferred to the water channels **c** through components including the air gaps **a**, the stator cores 1100, slot wedges **b** and the coils 1200, and a heat of the coils 1200 can only be transferred to the water channels **c** through insulation papers 1201 and the stator cores 1100. It can be seen that heat transfer paths of the rotor 2000 and the coils 1200 are long, leading to a high thermal resistance in conduction, which causes low heat dissipation efficiency.

### SUMMARY

To solve the above technical problem, a cooling structure is provided according to the present disclosure, which is arranged inside a motor, and is effectively close to a rotor, a coil and a stator core to improve the heat dissipation performance. A rotor and an axial flux motor having the cooling structure, and an assembly method of the axial flux motor are also provided.

According to an object of the present disclosure, a cooling structure is provided, including a cooling disc. The cooling disc includes a rotor facing surface, a stator facing surface, and a plurality of stator sleeve holes running from the rotor facing surface to the stator facing surface. A flow channel is further provided between the rotor facing surface and the stator facing surface, and the flow channel surrounds each of the plurality of stator sleeve holes.

As a preferred embodiment, the flow channel includes an outer annular flow channel, an inner annular flow channel, and a plurality of branch flow channels connected between the outer annular flow channel and the inner annular flow channel, and each of the plurality of stator sleeve holes is formed between two adjacent branch flow channels.

As a preferred embodiment, a plurality of blocking members are provided in each of the outer annular flow channel and the inner annular flow channel, and the plurality of blocking members in the outer annular flow channel are staggered relative to the plurality of blocking members in the inner annular flow channel.

As a preferred embodiment, the number of the cooling disc is two. The cooling structure further includes a connecting tube that is connected to the stator facing surfaces of the two cooling discs, and the rotor facing surfaces of the two cooling discs face outwards. The stator sleeve holes of the respective cooling discs are in one-to-one correspondence with each other.

As a preferred embodiment, a plurality of blocking members are provided in each of the outer annular flow channel and the inner annular flow channel of each of the two cooling discs, and the plurality of blocking members in the outer annular flow channel are aligned with the plurality of blocking members in the inner annular flow channel to divide the flow channel into a plurality of chambers that are circumferentially arranged. The chambers of the respective cooling discs are arranged in a staggered manner along a circumferential direction and are communicated through the connecting tube, allowing a cooling medium to flow back and forth sequentially between the chambers of the respective cooling discs.

As a preferred embodiment, the connecting tube is connected to the inner annular flow channels. An inlet and an outlet are formed on the inner annular flow channel of each of the two cooling discs, and the inlet and the outlet of one of the two cooling discs respectively correspond with the outlet and the inlet of the other one of the cooling discs. The inlet and an adjacent one of the outlet on the same inner annular flow channel are isolated from each other.

According to another object of the present disclosure, a stator is provided, including the cooling structure according to the above embodiments and a core winding unit. The core winding unit includes a stator core and coil assemblies. The stator core includes a plurality of teeth that are circumferentially arranged and spaced apart, and each of the plurality of teeth is inserted in one of the coil assemblies. The cooling disc is arranged on the stator core. The plurality of stator sleeve holes are in one-to-one correspondence with the plurality of teeth, and the rotor facing surface of the cooling disc faces outwards.

As a preferred embodiment, the stator core further includes a yoke plate, and the plurality of teeth are arranged on the yoke plate.

As a preferred embodiment, the coil assemblies are located between the yoke plate and the cooling disc, and the stator facing surface of the cooling disc abuts against the coil assemblies.

As a preferred embodiment, each of two sides of each of the plurality of teeth along the circumferential direction is recessed inwards to form a recess portion, and the one of the coil assemblies is embedded in the recess portion. The cooling disc is engaged between two adjacent coil assemblies, and the stator facing surface of the cooling disc abuts against the yoke plate.

According to yet another object of the present disclosure, an axial flux motor is provided, including the stator according to the above embodiments, a rotor and a frame. The stator is enclosed in the frame, and the rotor facing surface of the stator faces the rotor.

As a preferred embodiment, the number of the rotor is one, the number of the stator is two, and the numbers of the cooling disc and the core winding unit of each of the two stators are both one. The rotor is retained between the two stators with an air gap between the rotor and each of the two stators, and the axial flux motor is a double-stator single-rotor motor.

As a preferred embodiment, the frame includes two housings, and each of the two housings includes a bottom plate and an outer side plate that extends along an outer edge of the bottom plate. Each of the two housings is configured to fix a corresponding one of the two stators, where the stator is located in a region defined by the outer side plate, and is fixed on the bottom plate through the yoke plate of the stator core. The outer side plates of the two housings abut against each other and are fixed to each other, and the bottom plates of the two housings are oriented outwards.

As a preferred embodiment, the outer annular flow channel extends outwards to form an inlet/outlet segment, which is partitioned by a partition into an inlet portion and an outlet portion adjacent to each other, and the outer side plates are provided with an engagement port for the inlet/outlet segment to pass through.

As a preferred embodiment, the number of the stator is one, the number of the rotor is two, and the numbers of the cooling disc and the core winding unit of the stator are both two. The two core winding units are arranged between the two rotors, and the rotor facing surfaces respectively face the two rotors. The teeth of the respective core winding units are in one-to-one correspondence with each other and are integrally connected into a whole through the yoke plate, and the axial flux motor is a single-stator double-rotor motor.

As a preferred embodiment, the frame includes an outer side plate and two bottom plates. The two cooling discs are respectively engaged at two ends of the outer side plate, and the two core winding units, which are integrally connected to each other, are fixed between the two cooling discs. The two ends of the outer side plate are respectively blocked by the two bottom plates.

As a preferred embodiment, the teeth of the respective core winding units are in one-to-one correspondence and integrally connected to each other. An inner wall of the outer side plate is provided with a plurality of engagement ribs that are spaced apart, and the teeth, which are in one-to-one correspondence and integrally connected to each other, of the respective core winding units are each engaged between two adjacent engagement ribs.

As a preferred embodiment, the inlet/outlet segment of one of the two cooling discs is configured for discharging the cooling medium, and the inlet/outlet segment of the other one of the two cooling discs is configured for introducing the cooling medium.

As a preferred embodiment, the frame further includes an inner side plate and a support block. The inner side plate is inserted in the stator, and the support block is provided on an inner wall of the outer side plate. The cooling disc is supported and fixed on the inner side plate and/or the support block.

According to still another object of the present disclosure, an assembly method of an axial flux motor is provided, including:
S 100, providing a cooling disc, which includes a rotor facing surface, a stator facing surface, and a plurality of stator sleeve holes running from the rotor facing surface to the stator facing surface;
S200, arranging the stator facing surface of the cooling disc to face a core winding unit, and arranging the cooling disc onto the core winding unit through the plurality of stator sleeve holes to form a stator; and
S300, arranging a rotor to face the rotor facing surface of the cooling disc, and enclosing the rotor and the stator in a frame.

As a preferred embodiment, the core winding unit includes a stator core and coil assemblies, and the stator core includes a plurality of teeth. The step S200 includes: arranging the coil assemblies on the plurality of teeth, and inserting the plurality of teeth into the plurality of stator sleeve holes of the cooling disc, so that the coil assemblies are limited between the stator core and the cooling disc.

As a preferred embodiment, the numbers of the core winding unit and the cooling disc are both two, and the two core winding units are integrally connected back to back into a whole. The step S200 includes: arranging the two cooling discs respectively on two sides of the two core winding units that are integrally connected to each other.

As a preferred embodiment, the frame includes two housings. The step S300 includes: mounting the two stators inside the two housings respectively, and connecting the two housings face to face, so that the rotor is retained between the two stators with an air gap between the rotor and each of the two stators.

As a preferred embodiment, the frame includes an outer side plate and two bottom plates. The step S300 includes: engaging the two cooling discs of the stator respectively at two ends of the outer side plate with the two core winding units, which are integrally connected to each other, being fixed between the two cooling discs, and blocking the two ends of the outer side plate with the two bottom plates respectively.

Compared with the conventional technology, the present technical solution has the following advantages.

The cooling disc can be arranged inside the motor and located between the stator and the rotor. The rotor facing surface of the cooling disc faces the rotor, and the stator facing surface of the cooling disc faces the stator. The cooling medium is introduced into the flow channel, so that the heat of the rotor and the stator is transferred through the flowing cooling medium. Compared with a conventional arrangement of a water channel on the frame, a heat transfer path between the cooling structure and each of the rotor and the stator is shortened, thereby improving the heat dissipation performance to ensure reliable operation of the motor. Furthermore, the water channel on the frame is removed, and therefore the structure is simplified, and processing difficulty and cost are reduced. The cooling disc is further provided with the flow channel for even circulation of the cooling medium, which effectively ensures the cooling effects. Moreover, the number of the cooling disc may be one or two to suit various types of axial flux motors, thereby improving the applicability. The cooling disc may abut against the coil assemblies or be engaged between two adjacent coil assemblies. As such, not only can the heat dissipation performance be enhanced, but also the coil can be prevented from departing from the stator core. That is, compared with the conventional technology, a slot wedge structure is removed, and less motor parts are needed, thereby reducing the cost and effectively improving the assembling efficiency. Additionally, the cooling disc is applicable to various types of axial flux motors, thereby improving the applicability.

The present disclosure is further described hereinafter in conjunction with the accompanying drawings and embodiments.

### BRIEF DESCRIPTION OF THE DRAWINGS

FIG. 1 is a schematic view showing the structure of an existing axial flux motor;
FIG. 2 is a schematic view showing the structure of a first embodiment of a cooling structure according to the present disclosure;
FIG. 3 is a schematic view showing an interior of the first embodiment of the cooling structure according to the present disclosure;
FIG. 4 is a schematic view showing the structure of a second embodiment of the cooling structure according to the present disclosure;
FIG. 5 is a side view of the second embodiment of the cooling structure according to the present disclosure;
FIG. 6 is a sectional view taken along a line A-A in FIG. 5;
FIG. 7 is a sectional view taken along a line B-B in FIG. 5;
FIG. 8 is a schematic view of a flow channel of the second embodiment of the cooling structure according to the present disclosure;
FIG. 9 is a schematic view showing the structure of a first embodiment of a stator according to the present disclosure;
FIG. 10 is a schematic view showing the structure of a stator core of the first embodiment of the stator according to the present disclosure;
FIG. 11 is a schematic view showing the structure of a coil assembly of the first embodiment of the stator according to the present disclosure;
FIG. 12 is a schematic view showing the structure of a second embodiment of the stator according to the present disclosure;
FIG. 13 is a schematic view showing the cooperation of a stator core and coil assemblies of the second embodiment of the stator according to the present disclosure;
FIG. 14 is a schematic view showing the structure of the stator core of the second embodiment of the stator according to the present disclosure;
FIG. 15 is a schematic view showing the structure of the coil assembly of the second embodiment of the stator according to the present disclosure;
FIG. 16 is a schematic view showing the structure of a stator core of a third embodiment of the stator according to the present disclosure;
FIG. 17 is a schematic view showing the structure of the fourth embodiment of the stator according to the present disclosure;
FIG. 18 is a schematic view showing the structure of a stator core of a fourth embodiment of the stator according to the present disclosure;
FIG. 19 is a schematic view showing the structure of a fifth embodiment of the stator according to the present disclosure;
FIG. 20 is a schematic view showing the cooperation of a stator core and coil assemblies of the fifth embodiment of the stator according to the present disclosure;
FIG. 21 is a schematic view showing the structure of a first embodiment of an axial flux motor according to the present disclosure;
FIG. 22 is a schematic view showing the cooperation of a cooling disc and a stator core of the first embodiment of the axial flux motor according to the present disclosure;
FIG. 23 is a schematic view showing the cooperation of a housing and the stator core of the first embodiment of the axial flux motor according to the present disclosure;
FIG. 24 is a schematic view showing the structure of the housing of the first embodiment of the axial flux motor according to the present disclosure;
FIG. 25 is a schematic view showing the structure of a second embodiment of the axial flux motor according to the present disclosure;
FIG. 26 is a schematic view showing the structure of an outer side plate of the second embodiment of the axial flux motor according to the present disclosure;
FIG. 27 is a schematic view showing the structure of a third embodiment of the axial flux motor according to the present disclosure;
FIG. 28 is a schematic view showing the structure of a fourth embodiment of the axial flux motor according to the present disclosure;
FIG. 29 is a schematic view showing the structure of a fifth embodiment of the axial flux motor according to the present disclosure; and
FIG. 30 is a schematic view showing the structure of an outer side plate of the fourth embodiment of the axial flux motor according to the present disclosure.

### DETAILED DESCRIPTION OF THE EMBODIMENTS

The following description is intended to disclose the present disclosure so that those skilled in the art are capable of implementing the present disclosure. Preferred embodiments in the following description are only examples, and those skilled in the art may come up with other obvious variations. The basic principle of the present disclosure defined in the following description may be applied to other implementations, variations, modifications, equivalents and other technical solutions without departing from the spirit and scope of the present disclosure.

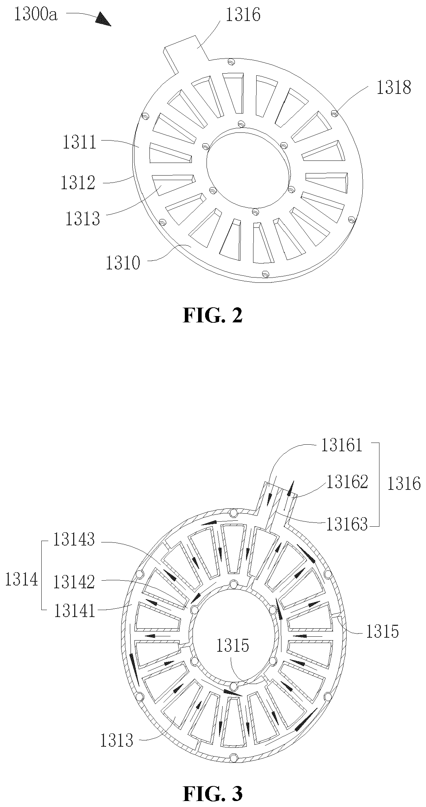

As shown in FIGS. 2 to 8, a cooling structure 1300a, 1300b includes a cooling disc 1310. The cooling disc 1310 includes a rotor facing surface 1311, a stator facing surface 1312, and multiple stator sleeve holes 1313 running from the rotor facing surface 1311 to the stator facing surface 1312. A flow channel 1314 is further provided between the rotor facing surface 1311 and the stator facing surface 1312, and the flow channel 1314 surrounds each of the multiple stator sleeve holes 1313.

The cooling disc 1310 may be arranged inside a motor and located between a stator and a rotor. The rotor facing surface 1311 of the cooling disc 1310 faces the rotor, and the stator facing surface 1312 of the cooling disc 1310 faces the stator. A cooling medium, which may include a liquid, a gas or the like, is introduced into the flow channel 1314. As such, a heat of the rotor and the stator is transferred through the flowing cooling medium. Compared with a conventional arrangement of a water channel on a frame, a heat transfer path between the cooling structure 1300a, 1300b and each of the rotor and the stator is shortened, thereby further improving the heat dissipation performance to ensure reliable operation of the motor. Furthermore, the water channel on the frame is removed, and therefore the structure is simplified, and processing difficulty and cost are reduced. Additionally, the multiple stator sleeve holes 1313 are in correspondence with teeth of a stator core, and the flow channel 1314 surrounds each of the multiple stator sleeve holes 1313, thereby further enhancing the heat dissipation effect on the motor.

FIGS. 2 and 3 are schematic views showing the structure of a first embodiment of the cooling structure 1300a. The number of the cooling disc 1310 is one, and the overall shape of the cooling disc 1310 is basically a thin flat disc shape, which can ensure that an axial flux motor has the advantage of small axial dimension. The first embodiment of the cooling structure 1300a may be applied to a single-stator single-rotor axial flux motor or a double-stator single-rotor axial flux motor.

Referring to FIG. 3, the flow channel 1314 includes an outer annular flow channel 13141, an inner annular flow channel 13142, and multiple branch flow channels 13143 connected between the outer annular flow channel 13141 and the inner annular flow channel 13142. Each of the multiple stator sleeve holes 1313 is formed between two adjacent branch flow channels 13143.

Specifically, the inner annular flow channel 13142 and the outer annular flow channel 13141 are arranged from the center to the periphery, and the multiple branch flow channels 13143 are circumferentially arranged and spaced apart, so that each stator sleeve hole 1313 is formed between two adjacent branch flow channels 13143. When each tooth of the stator core is inserted into the corresponding stator sleeve hole 1313, the inner annular flow channel 13142 and the outer annular flow channel 13141 are respectively arranged at two sides of the tooth in a radial direction, and another two sides of the tooth in a circumferential direction are respectively in correspondence with two adjacent branch flow channels 13143, so that the flow channel 1314 surrounds the tooth, thereby enhancing the heat dissipation performance on the stator core. A shape of the stator sleeve hole 1313 matches a shape of the tooth. For example, the shapes are both sectors, referring to FIGS. 2 and 3.

Continuously referring to FIG. 3, multiple blocking members 1315 are provided in each of the outer annular flow channel 13141 and the inner annular flow channel 13142, and the multiple blocking members 1315 in the outer annular flow channel 13141 are staggered relative to the multiple blocking members 1315 in the inner annular flow channel 13142. In this way, the cooling medium can flow back and forth between the outer annular flow channel 13141 and the inner annular flow channel 13142 through the multiple branch flow channels 13143, which reduces a flow resistance to some extent, and therefore improves the heat dissipation effect.

Each of the multiple blocking members 1315 in the outer annular flow channel 13141 is located between two adjacent branch flow channels 13143, so as to block the cooling medium, making the cooling medium flow into the inner annular flow channel 13142 through the branch flow channel 13143. Then the cooling medium is blocked by the blocking member 1315 in the inner annular flow channel 13142, and enters the outer annular flow channel 13141 through another branch flow channel 13143. By repeating such process, the cooling medium passes through the flow channel 1314 along the circumferential direction in sequence, thereby achieving the circulation of the cooling medium.

Continuously referring to FIG. 3, the outer annular flow channel 13141 extends outwards to form an inlet/outlet segment 1316, and the inlet/outlet segment 1316 is partitioned by a partition 13163 into an inlet portion 13161 and an outlet portion 13162 adjacent to each other. The inlet portion 13161 and the outlet portion 13162 are isolated from each other by the partition 13163. In this way, the cooling medium being introduced through the inlet portion 13161 can only flow through the flow channel 1314 in a counterclockwise direction and then be discharged through the outlet portion 13162. Since the inlet portion 13161 and the outlet portion 13162 are adjacent and concentrated, a contact area of the flow channel 1314 for cooling is increased, thereby improving the cooling performance.

The cooling disc 1310 may be made of a material that has relatively high strength and thermal conductivity, and relatively low magnetic permeability and electrical conductivity, such as aluminium oxide and aluminium alloy, so as to ensure relatively good cooling performance of the cooling disc 1310, while preventing the cooling disc 1310 from affecting the operation performance of the motor.

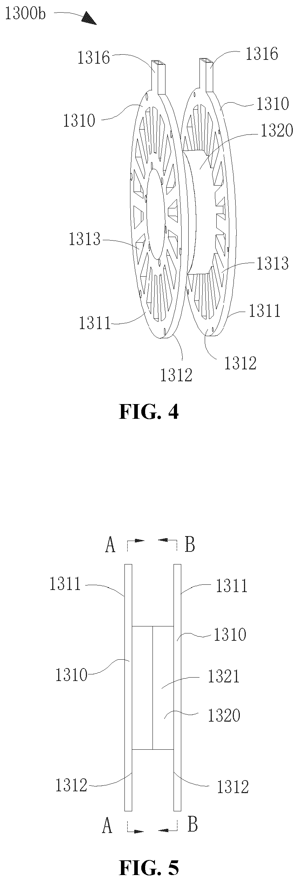

FIGS. 4 to 8 are schematic views showing the structure of a second embodiment of the cooling structure 1300b. The number of the cooling structure 1310 is two, and the cooling structure further includes a connecting tube 1320. The connecting tube 1320 is connected to the stator facing surfaces 1312 of the two cooling discs 1310, and the rotor facing surfaces 1311 of the two cooling discs 1310 face outwards. The multiple stator sleeve holes 1313 of one of the two cooling discs 1310 are in one-to-one correspondence with the multiple stator sleeve holes 1313 of the other one of the two cooling discs 1310.

The second embodiment of the cooling structure 1300b may be applied to a single-stator double-rotor axial flux motor. The stator is arranged around the connection tube 1320, and is arranged between the two cooling discs 1310. In this case, two sides of the stator in an axial direction respectively face the stator facing surfaces 1312 of the two cooling discs 1310 on both sides. The two rotors respectively face the rotor facing surfaces 1311 of the two cooling discs 1310, and are arranged on both sides of the cooling structure 1300b in the axial direction.

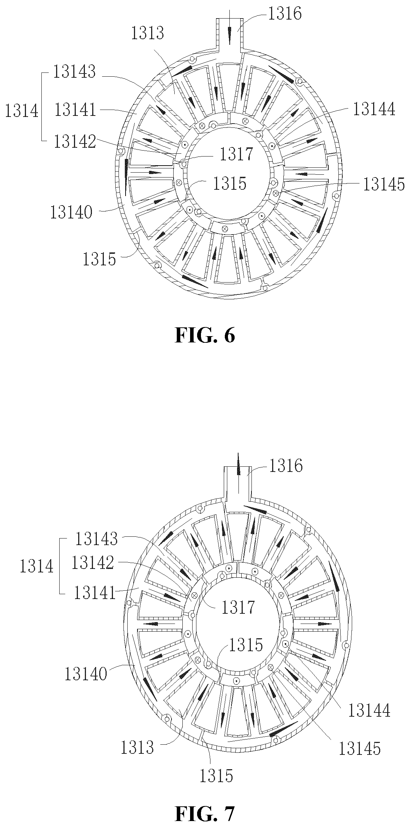

Similar to the first embodiment, the cooling medium may be introduced into and discharged from each of the two cooling discs 1310 independently according to the second embodiment of the cooling structure 1300b. Certainly, the cooling medium flows back and forth between the two cooling discs 1310 through the connection tube 1320, so as to increase the contact area between the cooling medium and the stator to improve the cooling performance. Referring to FIGS. 6 to 8, multiple blocking members 1315 are provided in each of the outer annular flow channel 13141 and the inner annular flow channel 13142 of each of the cooling discs 1310, and the multiple blocking members 1315 in the outer annular flow channel 13141 are aligned with the multiple blocking members 1315 in the inner annular flow channel 13142 to divide the flow channel 1314 into multiple chambers 13140 that are circumferentially arranged. The multiple chambers 13410 of one of the two cooling discs 1310 and the multiple chambers 13410 of the other one of the two cooling discs 1310 are arranged in a staggered manner along the circumferential direction and are communicated through the connecting tube 1320, so that the cooling medium flows back and forth between the multiple chambers 13410 of one of the two cooling discs 1310 and the multiple chambers 13410 of the other one of the two cooling discs 1310 in sequence.

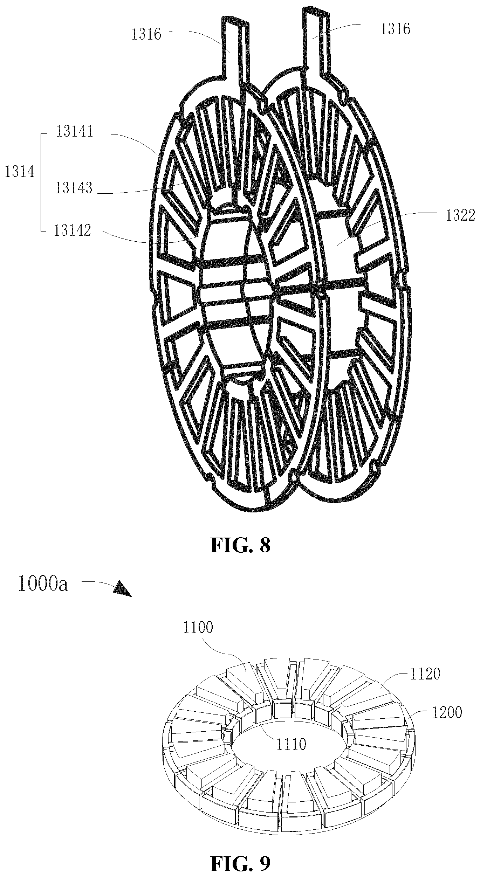

Specifically, the connecting tube 1320 is divided into multiple tube portions 1322 along the circumferential direction. Referring to FIG. 8, since the chambers 13410 of the respective cooling discs 1310 are staggered relative to each other along the circumferential direction, each of the multiple chambers 13410 of one of the two cooling discs 1310 is connected to two of the tube portions 1322 to be connected to two corresponding chambers 13140 of the other one of the two cooling discs 1310. In this way, the cooling medium flows back and forth between the chambers 13410 of the respective cooling discs 1310 in sequence through the multiple tube portions 1322. Since the stator is arranged around the connecting tube 1320, the heat inside the stator can also be transferred through the multiple tube portions 1322.

As shown in FIGS. 6 and 7, the connecting tube 1320 is connected to the inner annular flow channels 13142, and an inlet 13144 and an outlet 13145 are formed on the inner annular flow channel 13142 of each cooling disc 1310. The inlet 13144 and the outlet 13145 of one cooling disc 1310 respectively correspond with the outlet 13145 and the inlet 13144 of the other cooling disc 1310. The inlet 13144 and an adjacent one of the outlet 13145 on the same inner annular flow channel 13142 are isolated from each other.

Further, the inlet 13144 and the corresponding outlet 13145 respectively correspond to two ends of a corresponding one of the tube portions 1322. That is, referring to FIG. 8, the cooling medium in the outer annular flow channel 13141 of one of the two cooling discs 1310 flows to the inner annular flow channel 13142 through the branch flow channel 13143, enters the tube portion 1322 through the outlet 13145 on the inner annular flow channel 13142, and then enters a corresponding one of the chambers 13140 of the other one of the two cooling discs 1310. Specifically, the cooling medium enters this chamber 13140 through the inlet 13144 on the inner annular flow channel 13142 of the other one of the two cooling discs 1310, and then flows to the outer annular flow channel 13141 through the branch flow channel 13143. By repeating such process, the cooling medium flows back and forth between the chambers 13410 of the respective cooling discs 1310 in sequence through the multiple tube portions 1322.

Further, the inlet 13144 and the outlet 13145 on the same inner annular flow channel 13142 are arranged alternatively, and a blocker 1317 for isolation is provided between the inlet 13144 and the adjacent one of the outlet 13145 on the same inner annular flow channel 13142. Each of the multiple chambers 13140 of one cooling disc 1310 is in correspondence with one of the inlet 13144 and one of the outlet 13145, which respectively correspond to two of the multiple chambers 13140 of the other cooling disc 1310. The blocker 1317 is provided between the inlet 13144 and the adjacent outlet 13145, so as to avoid that the cooling medium flows directly from the inlet 13144 to the outlet 13145 without flowing through the outer annular flow channel 13141 and the branch flow channel 13143, which affects the cooling performance. Specifically, the cooling medium introduced from the inlet 13144 is blocked by the blocker 1317, and therefore can only flow to the outer annular flow channel 13141 through the branch flow channel 13143, and then flow to the adjacent outlet 13145 through another branch flow channel 13143. In this way, the cooling medium flows through all of the outer annular flow channel 13141, the inner annular flow channel 13142 and the branch flow channels 13143.

As shown in FIGS. 4 to 8, the outer annular flow channel 13141 of each of the two cooling discs 1310 extends outwards to form an inlet/outlet segment 1316. The inlet/outlet segment 1316 of one of the two cooling discs 1310 is configured for discharging the cooling medium, and the inlet/outlet segment 1316 of the other one of the two cooling discs 1310 is configured for introducing the cooling medium.

It should be noted that, if one of the multiple chambers 13140 of the other one of the two cooling discs 1310 is in communication with the inlet/outlet segment 1316 configured for introducing the cooling medium, then the inlet 13144 of this chamber 13140 is removed. That is, the inlet 13144 of this chamber 13140 is replaced by the inlet/outlet segment 1316 configured for introducing the cooling medium. Similarly, if one of the multiple chambers 13140 of the one of the two cooling discs 1310 is in communication with the inlet/outlet segment 1316 configured for discharging the cooling medium, then the outlet 13145 of this chamber 13140 is removed.

As shown in FIG. 5, the connecting tube 1320 is divided in the middle into two tube bodies 1321 that are respectively connected to the two cooling discs 1310. As such, the two cooling discs 1310 are inserted from two ends of the stator through the two tube bodies 1321 respectively to facilitate assembling. The two tube bodies 1321 may be connected to each other by engagement, insertion or other means. A sealing structure, such as a sealing ring, may also be provided to improve the sealing performance, so as to prevent the cooling medium from leaking.

In summary, the cooling disc 1310 may be arranged inside the motor and located between the stator and the rotor. The rotor facing surface 1311 of the cooling disc 1310 faces the rotor, and the stator facing surface 1312 of the cooling disc 1310 faces the stator. The cooling medium is introduced into the flow channel 1314, so that the heat of the rotor and the stator is transferred through the flowing cooling medium. Compared with the conventional arrangement of the water channel on the frame, the heat transfer path between the cooling structure 1300a, 1300b and each of the rotor and the stator is shortened, thereby further improving the heat dissipation performance to ensure reliable operation of the motor. Furthermore, the water channel on the frame is removed, and therefore the structure is simplified, and processing difficulty and cost are reduced. The cooling disc 1310 is further provided with the flow channel 1314 for even circulation of the cooling medium, which effectively ensures the cooling effects. Additionally, the number of the cooling disc 1310 may be one or two to suit various types of axial flux motors, thereby improving the applicability.

FIGS. 9 to 11 are schematic views showing the structure of a first embodiment of a stator 1000a. The stator 1000a includes the cooling structure 1300a according to the above embodiment and a core winding unit. The number of the core winding unit and the number of the cooling structure 1310 are the same, and are both one. The core winding unit includes a stator core 1100 and coil assemblies 1200. The stator core 1100 includes a yoke plate 1110 and multiple teeth 1120. The multiple teeth 1120 are circumferentially spaced apart on the yoke plate 1110, and each of the multiple teeth 1120 is inserted in one of the coil assemblies 1200. The cooling disc 1310 is arranged on the stator core 1100, and the multiple stator sleeve holes 1313 are in one-to-one correspondence with the multiple teeth 1120. The rotor facing surface 1311 of the cooling disc 1310 faces outwards relative to the yoke plate 1110, referring to FIGS. 2 and 3.

Since the stator 1000a employs the cooling structure 1300a according to the above embodiment, the beneficial effects of the stator 1000a may be referred to the cooling structure 1300a according to the above embodiment. The stator core 1100 may be wound by a silicon steel sheet.

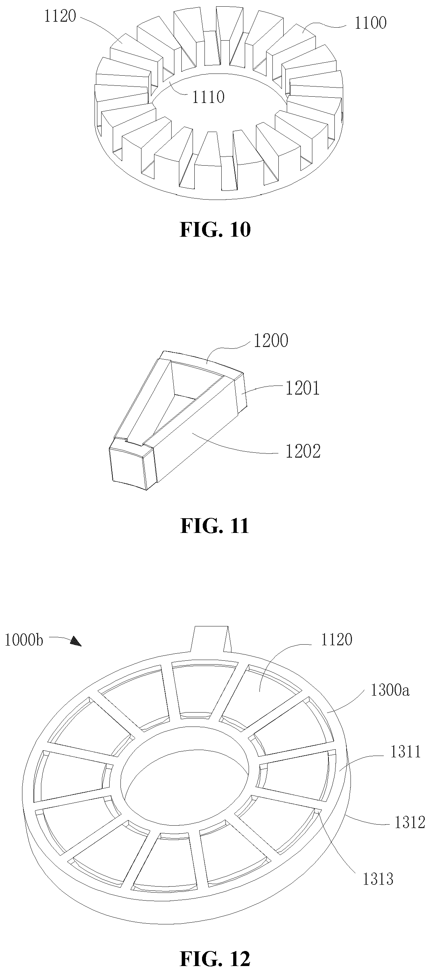

Referring to FIG. 10, the yoke plate 1110 is of an annular shape. Each of the multiple teeth 1120 extends to be connected to an inner edge and an outer edge of the yoke plate 1110. The shape of each of the multiple teeth 1120 and the shape of the corresponding stator sleeve hole 1313 match each other, and are both sectors, referring to FIGS. 2 and 3.

Referring to FIGS. 9 and 11, the shape of the coil assembly 1200 matches the shape of the corresponding tooth 1120, and is of a looped structure with a sector shape to surround the tooth 1120. A height of the tooth 1120 is larger than a height of the coil assembly 1200. As such, when the coil assembly 1200 is arranged around the tooth 1120, a part of the tooth 1120 extending out relative to the coil assembly 1200 is inserted into the corresponding stator sleeve hole 1313 of the cooling disc 1310, so that the stator facing surface 1312 of the cooling disc 1310 abuts against the coil assembly 1200. In this case, the coil assembly 1200 is located between the yoke plate 1110 and the cooling disc 1310, referring to FIG. 9. It can be seen that, both the tooth 1120 and the coil assembly 1200 contact the cooling disc 1310, so as to enhance the heat dissipation performance on the core winding unit. Moreover, the cooling disc 1310 can prevent the coil from being separated from the stator core 1100. That is, compared with the conventional technology, a slot wedge structure is removed, and less motor parts are needed, thereby reducing the cost and effectively improving the assembling efficiency.

Referring to FIG. 11, the coil assembly 1200 includes a coil 1201. An insulating thermal conductive structure may be provided between the coil 1201 and the cooling disc 1310 to ensure the insulation and heat transfer between the coil 1201 and the cooling disc 1310. Referring to FIG. 11, the insulating thermal conductive structure may be an insulation paper 1202. The insulation paper 1202 wraps on two sides of the coil 1201 along the circumferential direction, so that the insulation between the coil 1201 and the cooling disc 1310 is ensured, and the heat of the coil 1201 can be transferred to the cooling disc 1310 through the insulation paper 1202.

FIGS. 12 to 15 are schematic views showing the structure of a second embodiment of the stator 1000b. The second embodiment differs from the first embodiment in that, each of two sides of the tooth 1120 along the circumferential direction is recessed inwards to form a recess portion 1121, and the coil assembly 1200 is embedded in the recess portion 1121. The cooling disc 1310 is engaged between two adjacent coil assemblies 1200, so that the stator facing surface 1312 of the cooling disc 1310 abuts against the yoke plate 1110. A contact area between the cooling disc 1310 and each of the stator core 1100 and the coil assembly 1200 is increased, thereby further improve the heat dissipation performance.

Referring to FIGS. 12 to 14, the recess portion 1121 extends along a height direction of the tooth 1120 from a position where the tooth 1120 is connected to the yoke plate 1110. An extension height of the recess portion 1121 is smaller than the height of the tooth 1120, so that the tooth 1120 can also contact the cooling disc 1310 as well when the cooling disc 1310 is engaged between the two adjacent coil assemblies 1200.

The insulating thermal conductive structure between the coil 1201 and the cooling disc 1310 may be an alumina sheet or a coating with high thermal conductivity, and a joint face is filled with thermal conductive silicone grease or thermal conductive adhesive.

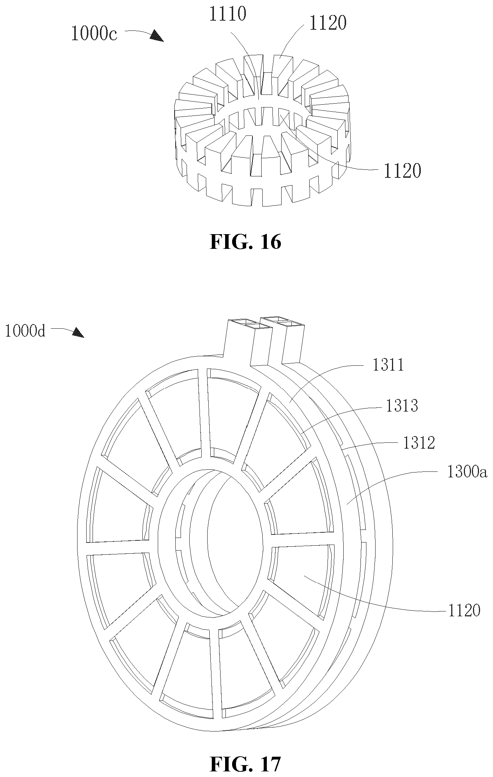

FIG. 16 is a schematic view showing the structure of a third embodiment of the stator 1000c. The third embodiment differs from the first embodiment in that, the number of the core winding unit and the number of the cooling disc 1310 are both two, and the two core winding units are integrally connected back to back through the yoke plate 1110 into a whole. The teeth 1120 of one of the two core winding units are in one-to-one correspondence with the teeth 1120 of the other one of the two core winding units, and the two cooling discs 1310 are respectively arranged on two sides of the two core winding units being integrally connected to each other. The third embodiment of the stator 1000c may be applied to a single-stator double-rotor axial flux motor.

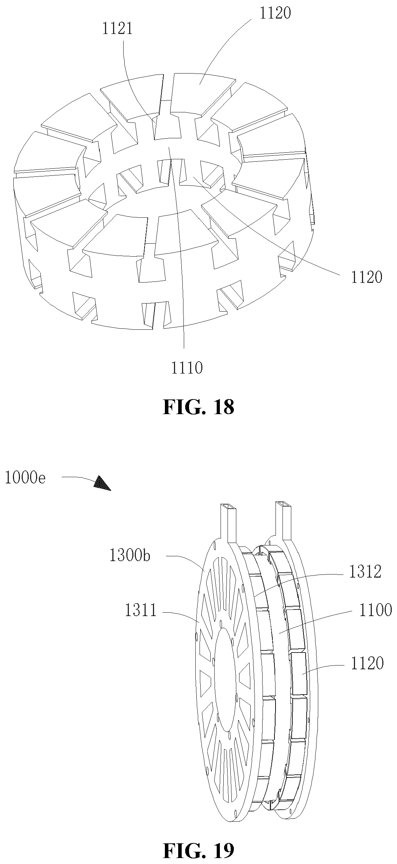

FIGS. 17 and 18 are schematic views showing the structure of a fourth embodiment of the stator 1000d. The fourth embodiment differs from the second embodiment in that, the number of the core winding unit and the number of the cooling disc 1310 are both two, and the two core winding units are integrally connected back to back through the yoke plate 1110 into a whole. The teeth 1120 of one of the two core winding units are in one-to-one correspondence with the teeth 1120 of the other one of the two core winding units, and the two cooling discs 1310 are respectively arranged on two sides of the two core winding units being integrally connected to each other. The fourth embodiment of the stator 1000c may be applied to a single-stator double-rotor axial flux motor.

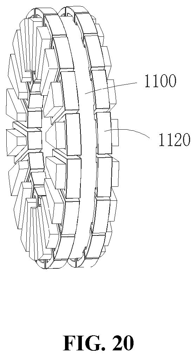

FIGS. 19 and 20 are schematic views showing the structure of a fifth embodiment of the stator 1000e, which includes the second embodiment of the cooling structure 1300b and two core winding units. The teeth 1120 of the respective core winding units are in one-to-one correspondence, and are integrally connected through the yoke plate 1110 into a whole. This whole structure may be arranged around the connecting tube 1320 and located between the two cooling discs 1310. In this case, two sides of the whole structure in the axial direction respectively correspond to the stator facing surfaces 1312 of the two cooling discs 1310 on both sides. The rotor facing surfaces 1311 of the two cooling discs 1310 are arranged on both sides of the cooling structure 1300b in the axial direction. The fifth embodiment of the stator 1000c may be applied to a single-stator double-rotor axial flux motor.

The shape of the tooth 1120 may be the same as the third embodiment. The coil assembly 1200 is located between the yoke plate 1110 and the corresponding cooling disc 1310, and the stator facing surface 1312 of the cooling disc 1310 abuts against the coil assembly 1200.

Alternatively, the shape of the tooth 1120 may be the same as the fourth embodiment. Referring to FIGS. 12 to 15, each of the two sides of the tooth 1120 along the circumferential direction is recessed inwards to form the recess portion 1121, and the coil assembly 1200 is embedded in the recess portion 1121. The cooling disc 1310 is engaged between two adjacent coil assemblies 1200, and the stator facing surface 1312 of the cooling disc 1310 abuts against the yoke plate 1110.

In the first embodiment to the fifth embodiment of the stator, the height of the tooth 1120 is the same as a thickness of the cooling disc 1310. In this way, when the cooling disc 1310 is mounted to the core winding unit, the cooling disc 1310 is flush with the tooth 1120 to achieve the advantage of the small overall axial dimension.

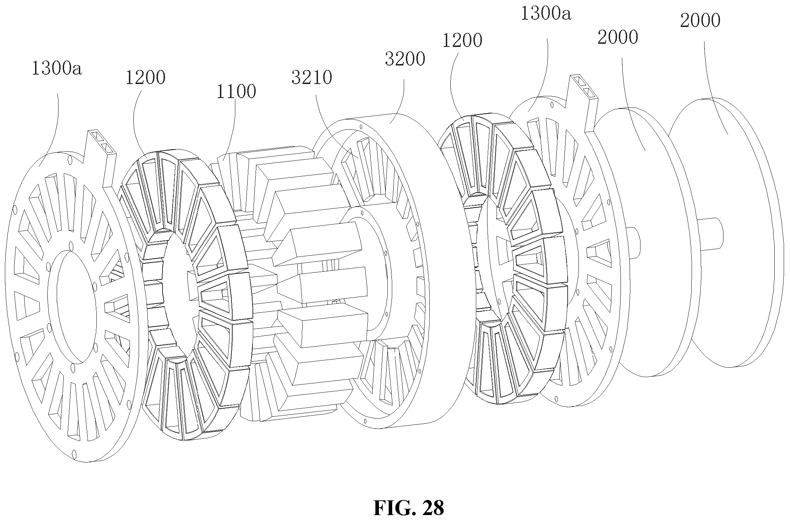

As shown in FIG. 28, a sixth embodiment of the stator 1000f includes the first embodiment of the cooling structure 1300a and a core winding unit. The core winding unit includes a stator core 1100 and coil assemblies 1200. The stator core 1100 includes multiple teeth 1120 that are circumferentially spaced apart, and each of the multiple teeth 1120 is inserted into one of the coil assemblies 1200. The cooling disc 1310 is arranged on the stator core 1100, and the multiple stator sleeve holes 1313 are in one-to-one correspondence with the multiple teeth 1120. The rotor facing surface 1311 of the cooling disc 1310 faces outwards.

Referring to FIG. 28, the number of the core winding unit and the number of the cooling disc 1310 are the same, and are both two. The teeth 1120 of one of the two core winding units and the teeth 1120 of the other one of the two core winding units are in one-to-one correspondence, and are integrally connected into a whole, so that the two cooling discs 1310 are respectively arranged on two sides of the two core winding units that are integrally connected to each other. The sixth embodiment of the stator 1000f may be applied to a single-stator double-rotor axial flux motor.

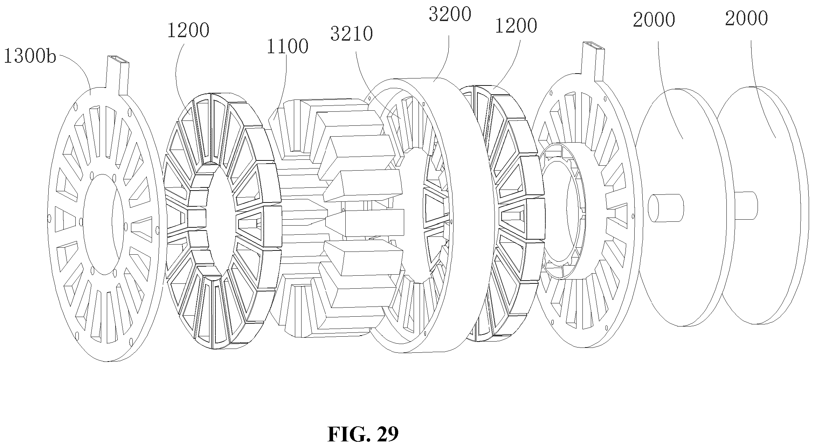

As shown in FIG. 29, a seventh embodiment of the stator 1000g differs from the sixth embodiment in that, the seventh embodiment of the stator 1000g employs the second embodiment of the cooling structure 1300b. Similarly, the seventh embodiment of the stator 1000g may be applied to a single-stator double-rotor axial flux motor.

In summary, the cooling disc 1310 is arranged on the stator core 1100, and the multiple stator sleeve holes 1313 are in one-to-one correspondence with the multiple teeth 1120. The rotor facing surface 1311 of the cooling disc 1310 faces outwards relative to the yoke plate 1110. The cooling disc 1310 may abut against the coil assembly 1200 or be engaged between two adjacent coil assemblies 1200. As such, not only can the heat dissipation performance be enhanced, but also the coil can be prevented from being separated from the stator core 1100. That is, compared with the conventional technology, the slot wedge structure is removed, and less motor parts are needed, thereby reducing the cost and effectively improving the assembling efficiency. Moreover, the cooling disc can be applied to various types of axial flux motors, thereby improving the applicability.

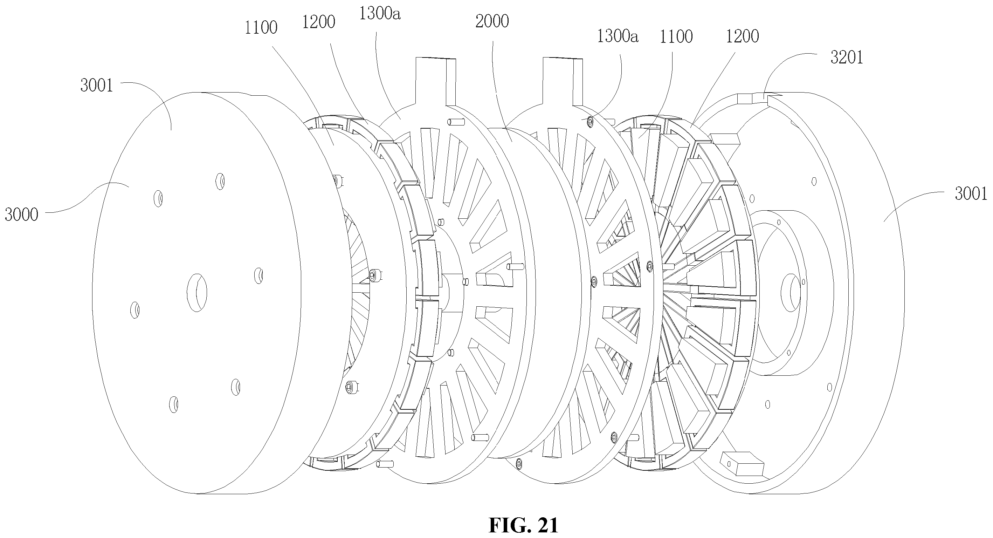

As shown in FIGS. 21 to 27, an axial flux motor is further provided according to the present disclosure, including the stator 1000a-1000f according to the above embodiments, a rotor 2000 and a frame 3000. The stator 1000a-1000f is enclosed in the frame 3000, and the rotor facing surface 1311 faces the rotor 2000. Since the axial flux motor employs the stator 1000a-1000f according to the above embodiments, the beneficial effects of the axial flux motor may be referred to the stator 1000a-1000f according to the above embodiments.

Axial flux motors may be divided into single-stator single-rotor motors, double-stator single-rotor motors, single-stator double-rotor motors and the like according to the number of the stator 1000a-1000f and the number of the rotor 2000. Detailed descriptions are provided hereinafter in three embodiments.

FIGS. 21 to 24 are schematic views showing the structure of a first embodiment of the axial flux motor, which employs the first and second embodiments of the stator 1000a-1000b. The number of the cooling disc 1310 of the stator 1000a-1000b and the number of the core winding unit of the stator 1000a-1000b are both one. The number of the rotor 2000 is one, and the number of the stator 1000a-1000b is two. In this case, the rotor 2000 is retained between the two stators 1000a-1000b with an air gap between the rotor 2000 and each of the two stators 1000a-1000b, and the axial flux motor is a double-stator single-rotor motor.

The heat of the rotor 2000 is transferred to the cooling disc 1310 through the air gap, and the cooling disc 1310 performs heat transfer and cooling.

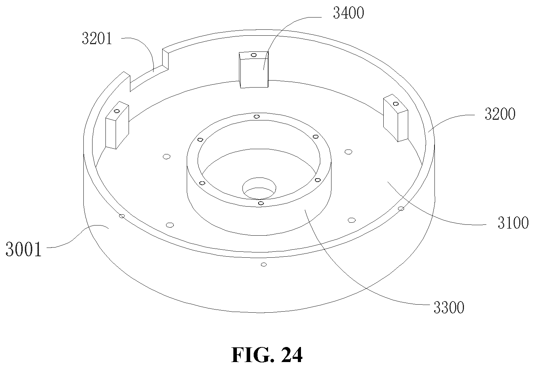

As shown in FIGS. 21 and 24, the frame 3000 includes two housings 3001, and each of the two housings 3001 includes a bottom plate 3100 and an outer side plate 3200 that extends along an outer edge of the bottom plate 3100. Each of the two housings 3001 is configured to fix a corresponding one of the two stators 1000a-1000b. The stator 1000a-1000b is located in a region defined by the outer side plate 3200, and is fixed on the bottom plate 3100 by a yoke plate 1110 of the stator core 1100. The outer side plates 3200 of the two housings 3001 abut each other and are fixed to each other, and the bottom plates 3100 are oriented outwards. The yoke plate 1110 may be fixed on the corresponding bottom plate 3100 through a bolt, so that the cooling disc 1310 is externally located relative to core winding unit on an outer side of the housing 3001. In this way, when the two housings 3001 face and abut each other and are fixed to each other through the outer side plates 3200, there is one cooling disc is provided between the rotor 2000 and each of the two core winding units, so that both sides of the rotor 2000 respectively contact the different cooling discs 1310, thereby improving the heat dissipation performance. The two housings 3001 may be fixed to each other by a bolt or by other means, which is not limited herein.

The outer annular flow channel 13141 extends outwards to form an inlet/outlet segment 1316. The inlet/outlet segment 1316 is partitioned by a partition 13163 into an inlet portion 13161 and an outlet portion 13162 adjacent to each other, and each of the outer side plates 3200 are provided with an engagement port 3201 for the inlet/outlet segment 1316 to pass through. The engagement port 3201 can not only enable the inlet/outlet segment 1316 to extend out, but also pre-fix the cooling discs 1310, so as to ensure the reliability and stability after assembling.

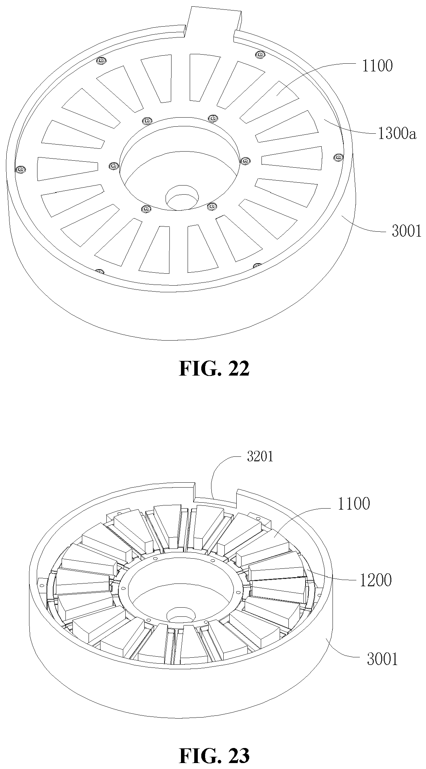

The frame 3000 further includes an inner side plate 3300 and a support block 3400. The inner side plate 3300 is inserted in the stator 1000c-1000e, and the support block 3400 is provided on an inner wall of the outer side plate 3200. The cooling disc 1310 is supported and fixed on the inner side plate 3200 and/or the support block 3400. Referring to FIG. 23, the core winding unit is located between the inner side plate 3300 and the outer side plate 3200. The cooling disc 1310 may abut against the inner side plate 3200 and/or the support block 3400, and is secured by a bolt. Referring to FIG. 2, the cooling disc 1310 is provided with mounting holes 1318 for the bolt to pass through. The mounting holes 1318 are specifically located at positions, corresponding to the support block 3400 and the outer side plate 3200, on the outer annular flow channel 13141 and the inner annular flow channel 13142 respectively. That is, the outer annular flow channel 13141 abuts against multiple support blocks 3400 that are circumferentially spaced apart, and the inner annular flow channel 13142 abuts against the inner side plate 3200.

As shown in FIG. 24, the multiple support blocks 3400 are spaced apart on the inner wall of the outer side plate 3200. Alternatively, the multiple support blocks 3400 may be connected in sequence to form a continuous annular structure, so as to ensure the stability of fixation of the cooling disc 1310.

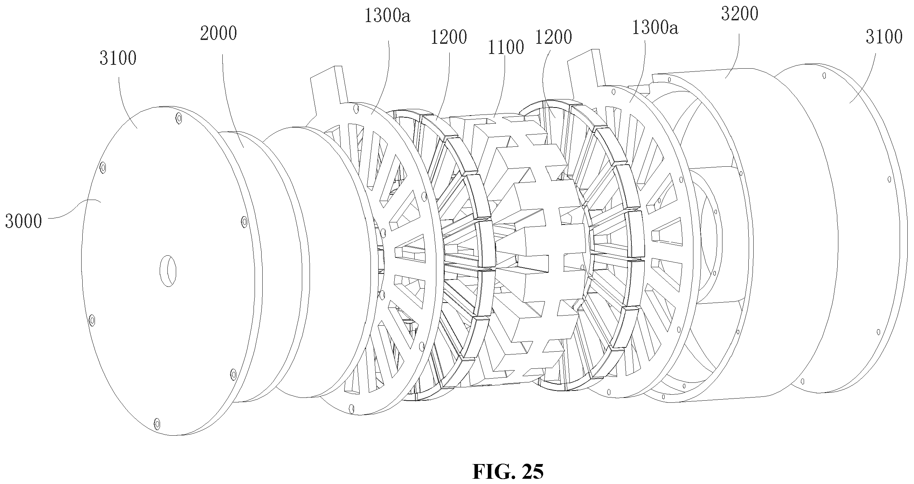

FIGS. 25 to 27 show schematic views of the structure of a second embodiment of the axial flux motor, which employs the third and fourth embodiments of the stator 1000c-1000d. The number of the cooling disc 1310 of the stator 1000c-1000d and the number of the core winding unit of the stator 1000c-1000d are both two. The number of the stator 1000c-1000d is one, and the number of the rotor 2000 is two. The two core winding units are arranged between the two rotors 2000, and the rotor facing surfaces 1311 respectively face the two rotors 2000. The multiple teeth 1120 of one of the two core winding units and the multiple teeth 1120 of the other one of the two core winding units are in one-to-one correspondence, and are integrally connected into a whole through the yoke plate 1110, and the axial flux motor is a single-stator double-rotor motor.

Each of the two rotors 2000 is in correspondence with one of the two cooling discs 1310. The heat of the rotor 2000 is transferred to the corresponding cooling disc 1310 through the air gap, and the cooling disc 1310 performs heat transfer and cooling.

The frame 3000 includes an outer side plate 3200 and two bottom plates 3100. Two ends of the outer side plate 3200 are each provided with an engagement port 3201. The outer annular flow channel 13141 of each of the two cooling discs 1310 extends outwards to form an inlet/outlet segment 1316. The two cooling discs 1310 are respectively engaged on the engagement ports 3201 at the two ends of the outer side plate 3200 through the inlet/outlet segments 1316, and the two core winding units being integrally connected to each other are fixed between the two cooling discs 1310. The two ends of the outer side plate 3200 are respectively blocked by the two bottom plates 3100.

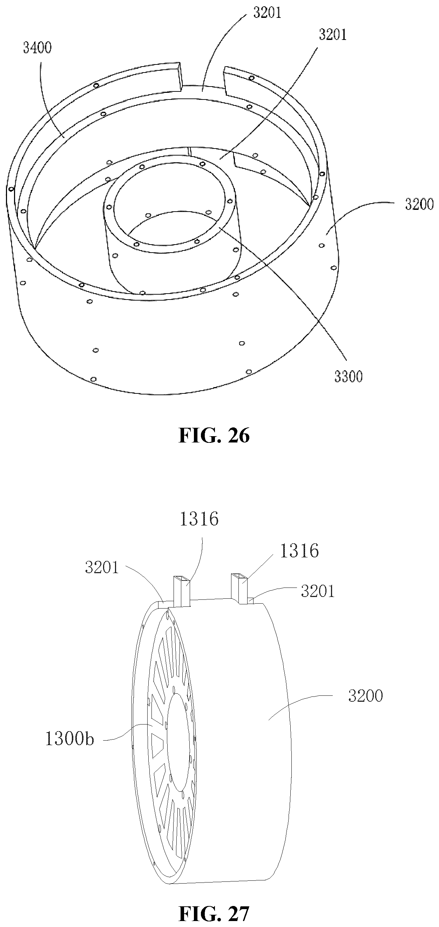

As shown in FIGS. 25 and 26, the frame 3000 further includes an inner side plate 3300 and a support block 3400. The inner side plate 3300 is inserted in the stator 1000c-1000e, and the support block 3400 is provided on an inner wall of the outer side plate 3200. Each of the two cooling discs 1310 is supported and fixed on the inner side plate 3200 and/or the support block 3400. The support block 3400 is of a continuous annular structure, and the two cooling discs 1310 respectively abut against two sides of the support block 3400 and two sides of the inner side plate 3200.

As shown in FIG. 27, the axial flux motor further includes a rotating shaft. The rotating shaft passes through a center of the stator 1000c-1000e and a center of the inner side plate 3300, and is rotatably arranged inside the frame 3000. For example, two ends of the rotating shaft are rotatably connected to the two bottom plates 3100 respectively. The two rotors 2000 are fixed on the rotating shaft.

FIG. 27 is a schematic view showing the structure of a third embodiment of the axial flux motor, which employs the fifth embodiment of the stator 1000e. The number of the cooling disc 1310 of the stator 1000e and the number of the core winding unit of the stator 1000e are both two. The number of the stator 1000e is one, and the number of the rotor 2000 is two. The two core winding units are arranged between the two rotors 2000, and the rotor facing surfaces 1311 respectively face the two rotors 2000. The multiple teeth 1120 of one of the two core winding units and the multiple teeth 1120 of the other one of the two core winding units are in one-to-one correspondence, and are integrally connected into a whole through the yoke plate 1110, and the axial flux motor is a single-stator double-rotor motor.

FIG. 28 is a schematic view showing the structure of a fourth embodiment of the axial flux motor, which differs from the second embodiment in that, the fourth embodiment employs the sixth embodiment of the stator 1000f. That is, the stator core 1100 has no yoke plate 1110, and the teeth 1120 of the respective core winding units are in one-to-one correspondence, and are integrally connected to each other. The two core winding units are arranged between the two rotors 2000, and the rotor facing surfaces 1311 respectively face the two rotors 2000. The axial flux motor forms a single-stator double-rotor motor.

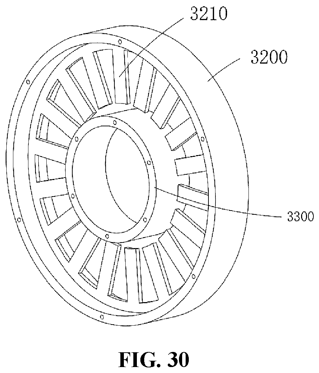

Moreover, the inner wall of the outer side plate is provided with multiple engagement ribs 3210 that are spaced apart, so that each of the teeth that are in one-to-one correspondence and are integrally connected is engaged between two adjacent engagement ribs 3210, referring to FIGS. 28 and 30. Specifically, each tooth 1120 pass between two adjacent engagement ribs 3210, and a surface of the tooth 1120 is smooth. As such, when the two cooling discs 1310 are arranged on the tooth 1120 and are respectively engaged on the two sides of the outer side plate, the two coil assemblies 1200 arranged on the tooth 1120 are respectively located on both sides of the engagement ribs 3210, and the coil assembly 1200 on each side is positioned between the corresponding cooling disc 1310 and the engagement ribs 3210. In this way, any positioning structure is unnecessary, so that the structure is more compact, thereby reducing the cost. Furthermore, the reliability and stability of the structure are improved.

FIG. 29 is a schematic view showing the structure of a fifth embodiment of the axial flux motor, which differs from the fourth embodiment in that, the fifth embodiment employs the seventh embodiment of the stator 1000g. That is, the connecting tube 1320 are connected between the two cooling discs 1310, referring to FIGS. 4 and 5. An assembly method of an axial flux motor is further provided according to the present disclosure, including the following steps.

In step S100, a cooling disc 1310 is provided. The cooling disc 1310 includes a rotor facing surface 1311, a stator facing surface 1312, and multiple stator sleeve holes 1313 running from the rotor facing surface 1311 to the stator facing surface 1312.

In step S200, the stator facing surface 1312 of the cooling disc 1310 is arranged to face a core winding unit, and the cooling disc 1310 is arranged onto the core winding unit through the multiple stator sleeve holes 1313 to form the stator 1000a-1000f.

In step S300, a rotor 2000 is arranged to face the rotor facing surface 1311 of the cooling disc 1310, and the rotor 2000 and the stator 1000a-1000f are enclosed in a frame 3000.

The core winding unit includes a stator core 1100 and coil assemblies 1200, and the stator core 1100 includes a yoke plate 1110 and multiple teeth 1120. Further, in the step S200, the coil assemblies 1200 are arranged on the teeth 1120, and the teeth 1120 are inserted into the stator sleeve holes 1313 of the cooling disc 1310, so that the coil assemblies 1200 are fixed between the stator core 1100 and the cooling disc 1310.

Alternatively, the stator core 1100 includes multiple teeth that are circumferentially arranged and spaced apart. Further, in the step S200, the coil assemblies 1200 are arranged on the teeth 1120, and the teeth 1120 are inserted into the stator sleeve holes 1313 of the cooling disc 1310, so that the coil assemblies 1200 are fixed between the stator core 1100 and the cooling disc 1310.

Referring to FIGS. 9 to 11, the coil assemblies 1200 are located between the yoke plate 1110 and the cooling disc 1310, and the stator facing surface 1312 of the cooling disc 1310 abuts against the coil assemblies 1200.

Referring to FIGS. 12 to 14, each of two sides of each of the teeth 1120 along a circumferential direction is recessed inwards to form a recess portion 1121. The step S200 includes a step that, the coil assemblies 1200 are embedded in the recess portions 1121, and the cooling disc 1310 is engaged between two adjacent coil assemblies 1200. The stator facing surface 1312 of the cooling disc 1310 abuts against the yoke plate 1110.

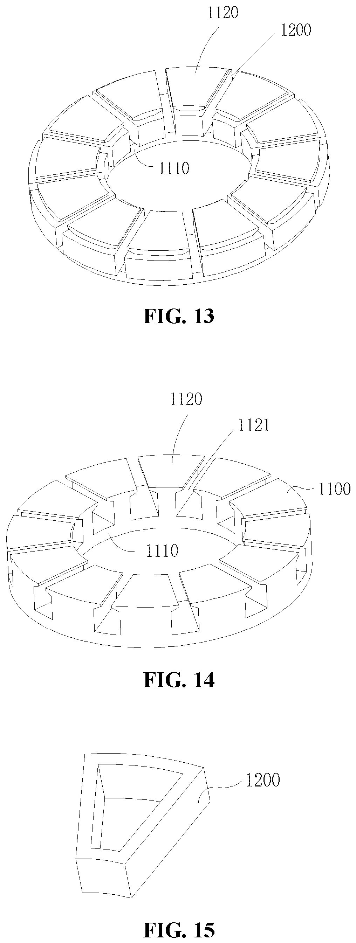

Referring to FIGS. 15 to 17, the number of the core winding unit and the number of the cooling disc 1310 are both two, and the two core winding units are integrally connected back to back through the yoke plate 1110 into a whole. The teeth 1120 of the respective core winding units are in one-to-one correspondence with each other. The step S200 includes a step that, the two cooling discs 1310 are respectively arranged on two sides of the two core winding units being integrally connected to each other.

Referring to FIG. 18, a connecting tube 1320 is further provided between the two cooling discs 1310. The connecting tube 1320 is inserted into the two core winding units, and the two core winding units are arranged between the two cooling discs 1310.

As shown in FIGS. 21 to 24, the frame 3000 includes two housings 3001. The step S300 includes a step that, the two stators 1000a-1000b are respectively mounted inside the two housings 3001, and the two housings 3001 are connected face to face, so that the rotor 2000 is retained between the two stators 1000a-1000b with an air gap between the rotor 2000 and each of the two stators 1000a-1000b.

As shown in FIGS. 25 to 27, the frame 3000 includes an outer side plate 3200 and two bottom plates 3100. The step S300 includes the following steps. The two cooling discs 1310 of the stator 1000c-1000e are engaged respectively at two ends of the outer side plate 3200 with the two core winding units, which are integrally connected to each other, being fixed between the two cooling discs 1310. The two ends of the outer side plate 3200 are respectively blocked by the two bottom plates 3100.

As shown in FIGS. 28 and 29, when the teeth 1120 of the respective core winding units are in one-to-one correspondence with each other and are integrally connected to each other, an inner wall of the outer side plate is provided with multiple engagement ribs 3210 that are spaced apart. The method further includes the following steps. The teeth 1120 are each engaged between two adjacent engagement ribs 3210, and the coil assemblies 1200 are arranged on two ends of the teeth 1120. Then, the two cooling discs 1310 are respectively arranged on the two ends of the teeth 1120, and are engaged at the two ends of the outer side plate, so that the coil assemblies 1200 on each side can be positioned between the corresponding cooling disc 1310 and the two adjacent engagement ribs 3210.

The embodiments described hereinabove are only for illustrating the technical concepts and features of the present disclosure, and are intended to enable those skilled in the art to understand the content of the present disclosure and implement the present disclosure based on it. The application scope of the present disclosure is not limited to these embodiments. Any equivalent variation or modification made based on the spirit disclosed in the present disclosure will fall into the scope of the present disclosure.

## Claims

1. A cooling structure (1300a, 1300b), comprising a cooling disc (1310), wherein
the cooling disc (1310) comprises a rotor facing surface (1311), a stator facing surface (1312), and a plurality of stator sleeve holes (1313) running from the rotor facing surface (1311) to the stator facing surface (1312); and
a flow channel (1314) is further provided between the rotor facing surface (1311) and the stator facing surface (1312), and the flow channel (1314) surrounds each of the plurality of stator sleeve holes (1313).

2. The cooling structure (1300a, 1300b) according to claim 1, wherein the flow channel (1314) comprises an outer annular flow channel (13141), an inner annular flow channel (13142), and a plurality of branch flow channels (13143) connected between the outer annular flow channel (13141) and the inner annular flow channel (13142), and each of the plurality of stator sleeve holes (1313) is formed between two adjacent branch flow channels (13143).

3. The cooling structure (1300a, 1300b) according to claim 2, wherein a plurality of blocking members (1315) are provided in each of the outer annular flow channel (13141) and the inner annular flow channel (13142), and the plurality of blocking members (1315) in the outer annular flow channel (13141) are staggered relative to the plurality of blocking members (1315) in the inner annular flow channel (13142).

4. The cooling structure (1300a, 1300b) according to claim 2, wherein
the number of the cooling disc (1310) is two;
the cooling structure further comprises a connecting tube (1320) that is connected to the stator facing surfaces (1312) of the two cooling discs (1310), and the rotor facing surfaces (1311) of the two cooling discs (1310) face outwards; and
the stator sleeve holes (1313) of the respective cooling discs (1310) are in one-to-one correspondence with each other.

5. The cooling structure (1300a, 1300b) according to claim 4, wherein
a plurality of blocking members (1315) are provided in each of the outer annular flow channel (13141) and the inner annular flow channel (13142) of each of the two cooling discs (1310), and the plurality of blocking members (1315) in the outer annular flow channel (13141) are aligned with the plurality of blocking members (1315) in the inner annular flow channel (13142) to divide the flow channel (1314) into a plurality of chambers (13140) that are circumferentially arranged; and
the chambers (13140) of the respective cooling discs (1310) are arranged in a staggered manner along a circumferential direction and are communicated through the connecting tube (1320), allowing a cooling medium to flow back and forth sequentially between the chambers (13140) of the respective cooling discs (1310).

6. The cooling structure (1300a, 1300b) according to claim 5, wherein
the connecting tube (1320) is connected to the inner annular flow channels (13142);
an inlet (13144) and an outlet (13145) are formed on the inner annular flow channel (13142) of each of the two cooling discs (1310), and the inlet (13144) and the outlet (13145) of one of the two cooling discs (1310) respectively correspond with the outlet (13145) and the inlet (13144) of the other one of the cooling discs (1310); and
the inlet (13144) and an adjacent one of the outlet (13145) on the same inner annular flow channel (13142) are isolated from each other.

7. A stator (1000a-1000g), comprising the cooling structure (1300a, 1300b) according to any one of claims 1 to 6 and a core winding unit, wherein
the core winding unit comprises a stator core (1100) and coil assemblies (1200);
the stator core (1100) comprises a plurality of teeth (1120) that are circumferentially arranged and spaced apart, and each of the plurality of teeth (1120) is inserted in at least one of the coil assemblies (1200); and
the cooling disc (1310) is arranged on the stator core (1100), the plurality of stator sleeve holes (1313) are in one-to-one correspondence with the plurality of teeth (1120), and the rotor facing surface (1311) of the cooling disc (1310) faces outwards.

8. The stator (1000a-1000g) according to claim 7, wherein the stator core (1100) further comprises a yoke plate (1110), and the plurality of teeth (1120) are arranged on the yoke plate (1110).

9. The stator (1000a-1000g) according to claim 8, wherein the coil assemblies (1200) are located between the yoke plate (1110) and the cooling disc (1310), and the stator facing surface (1312) of the cooling disc (1310) abuts against the coil assemblies (1200).

10. The stator (1000a-1000g) according to claim 8, wherein
each of two sides of each of the plurality of teeth (1120) along a circumferential direction is recessed inwards to form a recess portion (1121), and the at least one of the coil assemblies (1200) is embedded in the recess portion (1121); and
the cooling disc (1310) is engaged between two adjacent coil assemblies (1200), and the stator facing surface (1312) of the cooling disc (1310) abuts against the yoke plate (1110).

11. An axial flux motor, comprising the stator (1000a-1000g) according to any one of claims 7 to 10, a rotor (2000) and a frame (3000), wherein the stator (1000a-1000g) is enclosed in the frame (3000), and the rotor facing surface (1311) of the stator (1000a-1000g) faces the rotor (2000).

12. The axial flux motor according to claim 11, wherein
the number of the rotor (2000) is one, and the number of the stator (1000a-1000b) is two, and the numbers of the cooling disc (1310) and the core winding unit of each of the two stators (1000a-1000b) are both one; and
the rotor (2000) is retained between the two stators (1000a-1000b) with an air gap between the rotor (2000) and each of the two stators (1000a-1000b), and the axial flux motor is a double-stator single-rotor motor.

13. The axial flux motor according to claim 12, wherein
the frame (3000) comprises two housings (3001), and each of the two housings (3001) comprises a bottom plate (3100) and an outer side plate (3200) that extends along an outer edge of the bottom plate (3100);
each of the two housings (3001) is configured to fix a corresponding one of the two stators (1000a-1000b), wherein the stator (1000a-1000b) is located in a region defined by the outer side plate (3200), and is fixed on the bottom plate (3100) through a yoke plate (1110) of the stator core (1100); and
the outer side plates (3200) of the two housings (3001) abut against each other and are fixed to each other, and the bottom plates (3100) of the two housings (3001) are oriented outwards.

14. The axial flux motor according to claim 13, wherein the outer annular flow channel (13141) extends outwards to form an inlet/outlet segment (1316), the inlet/outlet segment (1316) is partitioned by a partition (13163) into an inlet portion (13161) and an outlet portion (13162) adjacent to each other, and the outer side plates (3200) are provided with an engagement port (3201) for the inlet/outlet segment (1316) to pass through.

15. The axial flux motor according to claim 11, wherein
the number of the stator (1000c-1000g) is one, the number of the rotor (2000) is two, and the numbers of the cooling disc (1310) and the core winding unit of the stator (1000c-1000g) are both two;
the two core winding units are arranged between the two rotors (2000), and the rotor facing surfaces (1311) respectively face the two rotors (2000); and
the teeth (1120) of the respective core winding units are in one-to-one correspondence with each other, and are integrally connected to each other or integrally connected into a whole through the yoke plate (1110), and the axial flux motor is a single-stator double-rotor motor.

16. The axial flux motor according to claim 15, wherein
the frame (3000) comprises an outer side plate (3200) and two bottom plates (3100);
the two cooling discs (1310) are respectively engaged at two ends of the outer side plate (3200), and the two core winding units, which are integrally connected to each other, are fixed between the two cooling discs (1310); and
the two ends of the outer side plate (3200) are respectively blocked by the two bottom plates (3100).

17. The axial flux motor according to claim 16, wherein the teeth (1120) of the respective core winding units are in one-to-one correspondence and integrally connected to each other, an inner wall of the outer side plate is provided with a plurality of engagement ribs (3210) that are spaced apart, and the teeth (1120), which are in one-to-one correspondence and integrally connected to each other, of the respective core winding units are each engaged between two adjacent engagement ribs (3210).

18. The axial flux motor according to claim 16, wherein an inlet/outlet segment (1316) of one of the two cooling discs (1310) is configured for discharging a cooling medium, and an inlet/outlet segment (1316) of the other one of the two cooling discs (1310) is configured for introducing the cooling medium.

19. The axial flux motor according to claim 13 or 16, wherein
the frame (3000) further comprises an inner side plate (3300) and a support block (3400);
the inner side plate (3300) is inserted in the stator (1000c-1000e), and the support block (3400) is provided on an inner wall of the outer side plate (3200); and
the cooling disc (1310) is supported and fixed on the inner side plate (3300) and/or the support block (3400).

20. An assembly method of an axial flux motor, comprising:
S100, providing a cooling disc (1310), which comprises a rotor facing surface (1311), a stator facing surface (1312), and a plurality of stator sleeve holes (1313) running from the rotor facing surface (1311) to the stator facing surface (1312);
S200, arranging the stator facing surface (1312) of the cooling disc (1310) to face a core winding unit, and arranging the cooling disc (1310) onto the core winding unit through the plurality of stator sleeve holes (1313) to form a stator (1000a-1000g); and
S300, arranging a rotor (2000) to face the rotor facing surface (1311) of the cooling disc (1310), and enclosing the rotor (2000) and the stator (1000a-1000g) in a frame (3000).

21. The assembly method of the axial flux motor according to claim 20, wherein
the core winding unit comprises a stator core (1100) and coil assemblies (1200), and the stator core (1100) comprises a plurality of teeth (1120); and
the step S200 comprises arranging the coil assemblies (1200) on the plurality of teeth (1120), and inserting the plurality of teeth (1120) into the plurality of stator sleeve holes (1313) of the cooling disc (1310), so that the coil assemblies (1200) are limited between the stator core (1100) and the cooling disc (1310).

22. The assembly method of the axial flux motor according to claim 20, wherein
the numbers of the core winding unit and the cooling disc (1310) are both two, and the two core winding units are integrally connected back to back into a whole; and
the step S200 comprises arranging the two cooling discs (1310) respectively on two sides of the two core winding units that are integrally connected to each other.

23. The assembly method of the axial flux motor according to claim 21, wherein
the frame (3000) comprises two housings (3001); and
the step S300 comprises mounting the two stators (1000a-1000b) inside the two housings (3001) respectively, and connecting the two housings (3001) face to face, so that the rotor (2000) is retained between the two stators (1000a-1000b) with an air gap between the rotor (2000) and each of the two stators (1000a-1000b).

24. The assembly method of the axial flux motor according to claim 22, wherein
the frame (3000) comprises an outer side plate (3200) and two bottom plates (3100); and
the step S300 comprises engaging the two cooling discs (1310) of the stator (1000c-1000e) respectively at two ends of the outer side plate (3200), with the two core winding units, which are integrally connected to each other, being fixed between the two cooling discs (1310), and blocking the two ends of the outer side plate (3200) with the two bottom plates (3100) respectively.
